# EUROPÄISCHE PATENTANMELDUNG

(11) **EP 4 836 256 A1**
(43) Veröffentlichungstag der Anmeldung: **04.11.2026**
(21) Anmeldenummer: 23962779.7
(22) Anmeldetag: 29.12.2023
(51) Int. Cl.: H02K 11/21

(54) **RINGANORDNUNG UND MONTAGEVERFAHREN DAFÜR SOWIE FAHRZEUGANTRIEBSSTRANG**

(71) Anmelder: Schaeffler Technologies AG & Co. KG, 91074 Herzogenaurach (DE)
(72) Erfinder: ZHU, Tao, Shanghai 201804 (CN)
(74) Vertreter: Schaeffler Technologies
(86) Internationale Anmeldenummer: PCT/CN2023/143235
(87) Internationale Veröffentlichungsnummer: WO 2025/138104

(57) **Zusammenfassung**

Es wird eine Ringbaugruppe und deren Montageverfahren bereitgestellt. Die Ringbaugruppe umfasst einen Montagering MR und ein Trägerbauteil RC. Das Trägerbauteil RC bildet eine Ringnut 2c1, und der Montagering MR ist in der Ringnut 2c1 angeordnet. Montagering-Haltezähne 12 und Trägerhaltezähne 22 überlappen sich entlang der Axialrichtung A, um den Montagering MR axial zu begrenzen. Das Trägerbauteil RC bildet ferner eine Kerbe 2n; während der Bewegung des Montagerings MR entlang der Axialrichtung A in die Ringnut 2c1 treten die Montagering-Haltezähne 12 durch die Kerbe 2n hindurch. Der Montagering MR bildet eine Federlasche, und das Trägerbauteil RC bildet eine entsprechende Haltenut 2c2. Die Federlasche ragt in die Haltenut 2c2 hinein, um den Montagering MR in der Umfangsrichtung C des Montagerings MR umlaufend zu begrenzen. Auf diese Weise sind der Montagering und das Trägerbauteil stabil zusammengebaut, und die Ringbaugruppe weist an sich eine einfache Struktur auf, wodurch der Bearbeitungsprozess vereinfacht ist. Ferner wird ein Fahrzeugantriebssystem bereitgestellt, das die Ringbaugruppe umfasst.

## Beschreibung

### Technisches Gebiet

Die vorliegende Anmeldung betrifft die Struktur eines Fahrzeugantriebssystems und betrifft insbesondere eine Ringbaugruppe und deren Montageverfahren sowie ein Fahrzeugantriebssystem, das die Ringbaugruppe umfasst.

### Stand der Technik

Heutzutage ist es beispielsweise in einem Hybridantriebssystem mit P1-Architektur für eine präzise Regelung der elektrischen Maschine erforderlich, die Position und die Drehgeschwindigkeit des Motorrotors stets zu erfassen. Daher wird ein Wirbelstromsensor benötigt, um Parameter des Motorrotors zu detektieren. Üblicherweise ist ein Erfassungsziel des Wirbelstromsensors an einem Rotorträger des Motorrotors angebracht, um sich zusammen mit dem Rotorträger zu drehen, während ein Festteil des Wirbelstromsensors an einem Gehäuse befestigt ist und sich nicht dreht.

Bei bestehenden Lösungen, in denen das Erfassungsziel des Wirbelstromsensors am Rotorträger des Motorrotors angebracht ist, ist üblicherweise eine Übermaßpassung zwischen dem Erfassungsziel und dem Rotorträger erforderlich, und zudem muss ein Sicherungsring vorgesehen werden, um das Erfassungsziel axial zu begrenzen. Folglich weisen das Erfassungsziel und/oder der Rotorträger komplexe spanend bearbeitete Formen auf, und die Zahl der zugehörigen Bauteile ist hoch, was sowohl den Bearbeitungs- als auch den Montageprozess verkompliziert und zu relativ hohen Kosten führt.

### Zusammenfassung der Erfindung

Vor dem Hintergrund der dargelegten Mängel des Standes der Technik wurde die vorliegende Anmeldung gemacht. Ein Ziel der vorliegenden Anmeldung besteht darin, eine Ringbaugruppe und deren Montageverfahren bereitzustellen, wobei die Ringbaugruppe eine relativ einfache Struktur aufweist und ein Montagering mit einem relativ einfachen Montageverfahren in eine Ringnut eines Trägerbauteils eingesetzt werden kann. Ein weiteres Ziel der vorliegenden Anmeldung ist es, ein Fahrzeugantriebssystem bereitzustellen, das die oben beschriebene Ringbaugruppe umfasst.

Zur Erreichung der oben genannten Ziele kann die vorliegende Anmeldung die folgenden technischen Lösungen anwenden.

Es wird eine Ringbaugruppe bereitgestellt, die einen zusammengefügten Montagering und ein Trägerbauteil umfasst, wobei das Trägerbauteil eine eine radiale Öffnung aufweisende Ringnut bildet und der Montagering in der Ringnut angeordnet ist, wobei der Montagering Montagering-Haltezähne bildet und das Trägerbauteil Trägerhaltezähne bildet, und sich in Axialrichtung des Montagerings die Montagering-Haltezähne und die Trägerhaltezähne zumindest teilweise überlappen, um den Montagering axial zu begrenzen, und wobei das Trägerbauteil ferner eine Kerbe bildet, wobei während der Montage, in der der Montagering entlang der Axialrichtung zur Ringnut bewegt wird, die Montagering-Haltezähne durch die Kerbe hindurchtreten; und wobei der Montagering mindestens eine Federlasche bildet und das Trägerbauteil an einer ersten axialen Seitenwand oder einer zweiten axialen Seitenwand der Ringnut mindestens eine zur einen axialen Seite des Trägerbauteils oder zur anderen axialen Seite des Trägerbauteils eingetiefte Haltenut bildet, wobei die Federlasche in die Haltenut hineinragt, um den Montagering in Umfangsrichtung umlaufend zu begrenzen.

In einer optionalen Ausführungsform umfasst der Montagering mehrere in den Montagering-Haltezähnen ausgebildete erste Federlaschen, wobei die ersten Federlaschen an der zweiten axialen Seitenwand anliegen, sodass sich die ersten Federlaschen elastisch verformen und eine axiale Vorspannung erzeugen.

In einer weiteren optionalen Ausführungsform bildet der Montagering ferner als die mindestens eine Federlasche eine zweite Federlasche, die gegen eine auf einer axialen Seite angeordnete Seitenwand der Haltenut anliegt, sodass sich die zweite Federlasche elastisch verformt und eine axiale Vorspannung erzeugt.

In einer weiteren optionalen Ausführungsform umfasst der Montagering ferner einen ringförmigen Grundkörper, an dem die Montagering-Haltezähne ausgebildet sind; die zweite Federlasche ist an einem Abschnitt des ringförmigen Grundkörpers vorgesehen, der die Montagering-Haltezähne freilässt; und die mindestens eine Haltenut ist an der Position der Kerbe in der ersten axialen Seitenwand der Ringnut ausgebildet. In einer weiteren optionalen Ausführungsform ist zumindest im Naturzustand ein vom ringförmigen Grundkörper abgewandtes freies Ende der zweiten Federlasche relativ zum ringförmigen Grundkörper zu einer axialen Seite hin angehoben, und ein vom ringförmigen Grundkörper abgewandtes freies Ende der ersten Federlasche ist relativ zum ringförmigen Grundkörper zur anderen axialen Seite hin angehoben.

In einer weiteren optionalen Ausführungsform sind mehrere Montagering-Haltezähne gleichmäßig verteilt und entlang der Umfangsrichtung beabstandet angeordnet, mehrere Trägerhaltezähne sind gleichmäßig verteilt und entlang der Umfangsrichtung beabstandet angeordnet, und das Trägerbauteil bildet die Kerbe zwischen benachbarten Trägerhaltezähnen.

In einer weiteren optionalen Ausführungsform bildet das Trägerbauteil eine Montageöffnung, durch die der Montagering entlang der Axialrichtung zur Ringnut bewegt wird, wobei die Ringnut eine radial nach innen weisende und zur Montageöffnung hin offene Öffnung aufweist und in einem entlang der Axialrichtung des Montagerings und einer beliebigen Radialrichtung geführten Schnitt einen n-förmigen Querschnitt hat; in dem Schnitt verläuft eine Bodenwand der Ringnut axial geradlinig oder bogenförmig. Ferner wird ein Montageverfahren für die Ringbaugruppe gemäß einer der vorstehend genannten technischen Lösungen bereitgestellt, umfassend: einen Ausrichtungsschritt, in dem die Montagering-Haltezähne des Montagerings in Axialrichtung des Montagerings mit der Kerbe des Trägerbauteils fluchten, und der Montagering entlang der Axialrichtung zu einer Position bewegt wird, an der sich die Ringnut des Trägerbauteils befindet; sowie einen Rotationsschritt, in dem der Montagering relativ zum Trägerbauteil in Umfangsrichtung des Montagerings verdreht wird, sodass die Federlasche in die Haltenut hineinragt und sich die Montagering-Haltezähne und die Trägerhaltezähne des Trägerbauteils in Axialrichtung zumindest teilweise überlappen. Ferner wird ein Fahrzeugantriebssystem bereitgestellt, das die Ringbaugruppe gemäß einer der vorstehenden technischen Lösungen umfasst.

In einer optionalen Ausführungsform dient der Montagering der Ringbaugruppe als Zielkörper eines Wirbelstromsensors, und das Trägerbauteil ist ein Rotorträger einer elektrischen Maschine.

Durch die Anwendung der oben genannten technischen Lösung wird eine Ringbaugruppe bereitgestellt, die einen zusammengefügten Montagering und ein Trägerbauteil umfasst, wobei der Montagering in einer eine radiale Öffnung aufweisenden Ringnut des Trägerbauteils angeordnet ist. Einerseits bildet der Montagering Montagering-Haltezähne, das Trägerbauteil bildet Trägerhaltezähne, und entlang der Axialrichtung des Montagerings überlappen sich die Montagering-Haltezähne und die Trägerhaltezähne zumindest teilweise (mit anderen Worten: in Axialrichtung des Montagerings betrachtet besteht eine gegenseitige Abschattung), sodass die Ringnut eine axiale Begrenzung des Montagerings bewirkt. Andererseits bildet der Montagering mindestens eine Federlasche, und das Trägerbauteil bildet an einer ersten axialen Seitenwand oder einer zweiten axialen Seitenwand der Ringnut mindestens eine zur einen axialen Seite oder zur anderen axialen Seite des Trägerbauteils eingetiefte Haltenut, wobei die Federlasche in die Haltenut hineinragt, um den Montagering in Umfangsrichtung zu begrenzen. Außerdem bildet das Trägerbauteil eine Kerbe; während der Montage, bei der der Montagering entlang der Axialrichtung in die Ringnut bewegt wird, treten die Montagering-Haltezähne durch die Kerbe hindurch. Auf diese Weise kann durch die in Axialrichtung überlappende Anordnung der Montagering-Haltezähne und der Trägerhaltezähne die axiale Begrenzung des Montagerings realisiert und ein Herausfallen verhindert werden; durch das Hineinragen der Federlasche in die Haltenut kann die Umfangsbegrenzung des Montagerings realisiert werden. Somit wird der Montagering sowohl in Axialrichtung als auch in Umfangsrichtung begrenzt, womit eine stabile Montage des Montagerings und des Trägerbauteils erreicht wird; zudem ist die Ringbaugruppe an sich einfach aufgebaut, und der Bearbeitungsprozess ist vereinfacht. Darüber hinaus wird bei der Ringbaugruppe gemäß der vorliegenden Anmeldung auf einen Sicherungsring verzichtet, wodurch die für die Begrenzung erforderlichen Bauteile reduziert, die Komplexität von Bearbeitungs- und Montageprozess der Ringbaugruppe verringert und die entsprechenden Kosten gesenkt werden. Ferner wird ein Fahrzeugantriebssystem mit der oben beschriebenen Ringbaugruppe bereitgestellt, das die gleichen vorteilhaften Effekte aufweist.

Durch die Anwendung der oben genannten technischen Lösung wird ferner ein Montageverfahren für die Ringbaugruppe bereitgestellt, das einen Ausrichtungsschritt und einen Rotationsschritt umfasst. Im Ausrichtungsschritt werden die Montagering-Haltezähne des Montagerings in Axialrichtung des Montagerings mit der Kerbe des Trägerbauteils fluchtend ausgerichtet und der Montagering in diesem Zustand entlang der Axialrichtung zu der Position bewegt, an der sich die Ringnut des Trägerbauteils befindet. Im Rotationsschritt wird der Montagering in Umfangsrichtung relativ zum Trägerbauteil verdreht, sodass die Federlasche in die Haltenut hineinragt und sich die Montagering-Haltezähne und die Trägerhaltezähne des Trägerbauteils in Axialrichtung zumindest teilweise überlappen. Es ist verständlich, dass bei Bedarf im Rotationsschritt durch Aufbringen eines Drucks eine Interferenz zwischen einem Außenumfangsabschnitt des Montagerings und dem Trägerbauteil während des Verdrehens vermieden werden kann. Durch das sequentielle Ausführen der oben genannten Schritte kann somit die Montage der Ringbaugruppe mit einem relativ einfachen Montageverfahren realisiert werden.

### Kurzbeschreibung der Zeichnungen

Fig. 1A ist eine schematische Schnittansicht eines Fahrzeugantriebssystems gemäß einer Ausführungsform der vorliegenden Anmeldung, wobei Schraffuren weggelassen sind.
Fig. 1B ist eine vergrößerte schematische Darstellung der Struktur in dem Bereich S1 in Fig. 1A.
Fig. 2A ist eine Vorderansicht in schematischer Darstellung eines Montagerings der Ringbaugruppe des Fahrzeugantriebssystems aus Fig. 1A.
Fig. 2B ist eine vergrößerte schematische Darstellung der Struktur in dem Bereich S2 in Fig. 2A.
Fig. 2C ist eine vergrößerte schematische Darstellung der Struktur in dem Bereich S3 in Fig. 2A.
Fig. 3A ist eine schematische Perspektivansicht eines Teilaufbaus eines Trägerbauteils der Ringbaugruppe des Fahrzeugantriebssystems aus Fig. 1A.
Fig. 3B ist eine schematische Schnittansicht, mit weggelassenen Schraffuren, des Teilaufbaus des Trägerbauteils aus Fig. 3A.
Fig. 4A bis Fig. 4I sind schematische Darstellungen zur Erläuterung des Montageverfahrens der Ringbaugruppe des Fahrzeugantriebssystems aus Fig. 1A, wobei Fig. 4B und Fig. 4C schematische Schnittansichten entlang M1-M1 bzw. N1-N1 in Fig. 4A sind; Fig. 4E und Fig. 4F sind schematische Schnittansichten entlang M2-M2 bzw. N2-N2 in Fig. 4D, und die gestrichelten Linien entsprechen jeweils den Zuständen der Federlaschen in Fig. 4B bzw. Fig. 4C; und Fig. 4H und Fig. 4I sind schematische Schnittansichten entlang M3-M3 bzw. N3-N3 in Fig. 4G.

### Ausführungsbeispiele

Nachfolgend werden spezifische Ausführungsbeispiele der vorliegenden Anmeldung anhand der Zeichnungen ausführlich beschrieben. Es ist zu verstehen, dass diese spezifischen Beschreibungen lediglich dazu dienen, Fachleute anzuleiten, wie die vorliegende Anmeldung auszuführen ist, ohne alle denkbaren Ausführungsarten der vorliegenden Anmeldung zu erschöpfen, und ohne den Schutzumfang der vorliegenden Anmeldung zu beschränken.

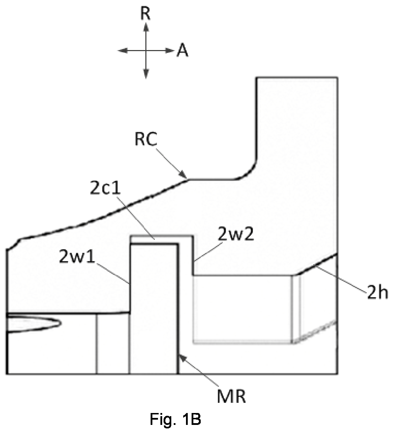

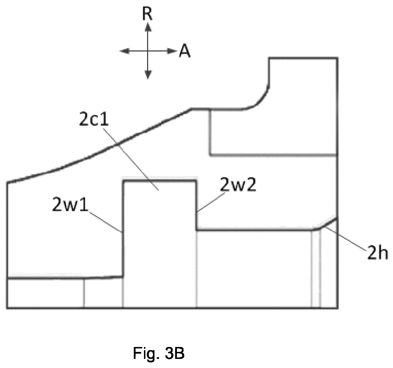

Es sei angemerkt, dass, sofern nicht anders angegeben, in der vorliegenden Anmeldung "axial", "radial" und "umfangsseitig/Umfangsrichtung" jeweils die Axialrichtung, Radialrichtung bzw. Umfangsrichtung des Montagerings der Ringbaugruppe bedeuten. Außerdem bezeichnet in Fig. 1B und Fig. 3B "eine axiale Seite" die linke Seite in den Zeichnungen und "die andere axiale Seite" die rechte Seite in den Zeichnungen. In der vorliegenden Anmeldung bedeutet "drehmomentübertragend gekoppelt", dass zwei Bauteile so miteinander verbunden sind, dass ein Drehmoment zwischen ihnen übertragen werden kann, einschließlich einer direkten und einer indirekten Verbindung.

Im Folgenden wird ein Fahrzeugantriebssystem gemäß einer Ausführungsform der vorliegenden Anmeldung anhand der Zeichnungen erläutert.

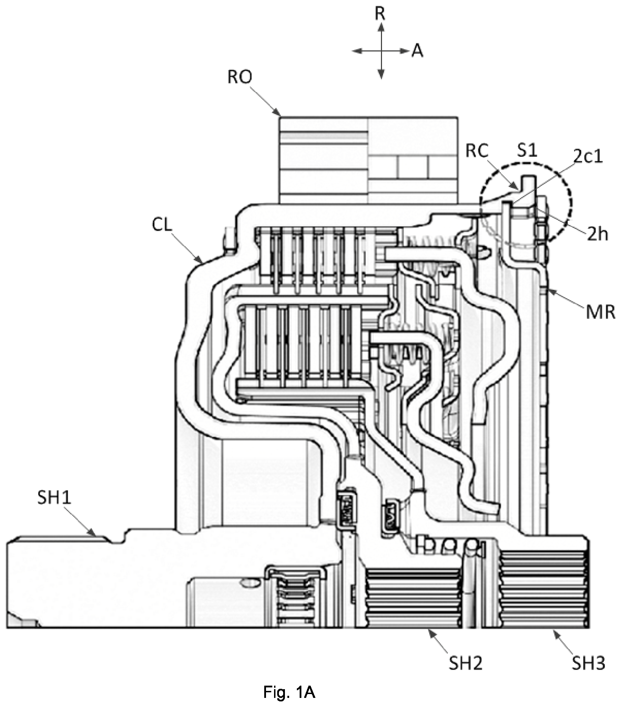

Wie in Fig. 1A und Fig. 1B gezeigt, umfasst das Fahrzeugantriebssystem gemäß einer Ausführungsform der vorliegenden Anmeldung eine elektrische Maschine, eine Doppelkupplung CL, eine Eingangswelle SH1, eine erste Ausgangswelle SH2, eine zweite Ausgangswelle SH3 und einen Montagering MR, die zusammengefügt sind.

Wie in Fig. 1A dargestellt, umfasst die elektrische Maschine einen Motorstator, einen Motorrotor RO und einen Rotorträger. Zwischen dem Motorrotor RO und dem Motorstator ist ein Luftspalt vorgesehen, und der Motorrotor RO ist relativ zum Motorstator drehbar. Der Rotorträger ist mit dem Motorrotor RO fest verbunden und dient als Trägerbauteil RC der Ringbaugruppe. Der Rotorträger ist direkt drehmomentübertragend mit der Eingangswelle SH1 gekoppelt.

Wie in Fig. 1A dargestellt, ist die Doppelkupplung CL eine Reibkupplung und umfasst zwei Kupplungseinheiten, die unabhängig voneinander arbeiten können. Durch Eingriff und Trennung der beiden Kupplungseinheiten kann die Eingangswelle SH1 wahlweise drehmomentübertragend mit den beiden Ausgangswellen SH2, SH3 gekoppelt werden.

Wie in Fig. 1A dargestellt, dient die Eingangswelle SH1 zur drehmomentübertragenden Kopplung mit einem Verbrennungsmotor, sodass das vom Verbrennungsmotor kommende Drehmoment über die Eingangswelle SH1 in das Fahrzeugantriebssystem übertragen werden kann. Die erste Ausgangswelle SH2 ist mit einer Innenverzahnung versehen und drehmomentübertragend über einen Verzahnungsmechanismus mit einer Eingangswelle eines Getriebes koppelbar. Die zweite Ausgangswelle SH3 ist ebenfalls mit einer Innenverzahnung versehen und drehmomentübertragend über einen Verzahnungsmechanismus mit einer anderen Eingangswelle des Getriebes koppelbar.

Wie in Fig. 1A und Fig. 1B dargestellt, dient ein Erfassungsziel eines Wirbelstromsensors als Montagering MR der Ringbaugruppe, und der Montagering MR ist in der Ringnut 2c1 des Trägerbauteils RC angeordnet. In den drei Richtungen Axialrichtung A, Radialrichtung R und Umfangsrichtung C ist der Montagering MR relativ zum Trägerbauteil RC begrenzt. Dadurch können sich der Montagering MR und das Trägerbauteil RC zusammen mit dem Motorrotor RO drehen, und ein Festteil des Wirbelstromsensors arbeitet mit dem Montagering MR zusammen, um die Position und die Drehgeschwindigkeit des Motorrotors RO zu erfassen.

Nachfolgend wird die Ringbaugruppe im Fahrzeugantriebssystem erläutert.

Wie in Fig. 1A und Fig. 1B dargestellt, umfasst die Ringbaugruppe der vorliegenden Anmeldung einen zusammengefügten Montagering MR und ein Trägerbauteil RC. In diesem Ausführungsbeispiel dient der Montagering MR als Erfassungsziel eines Wirbelstromsensors und das Trägerbauteil RC als Rotorträger. Das Trägerbauteil RC bildet eine Ringnut 2c1 mit radialer Öffnung und Boden, und der Montagering MR ist in der bodenseitigen Ringnut 2c1 angeordnet.

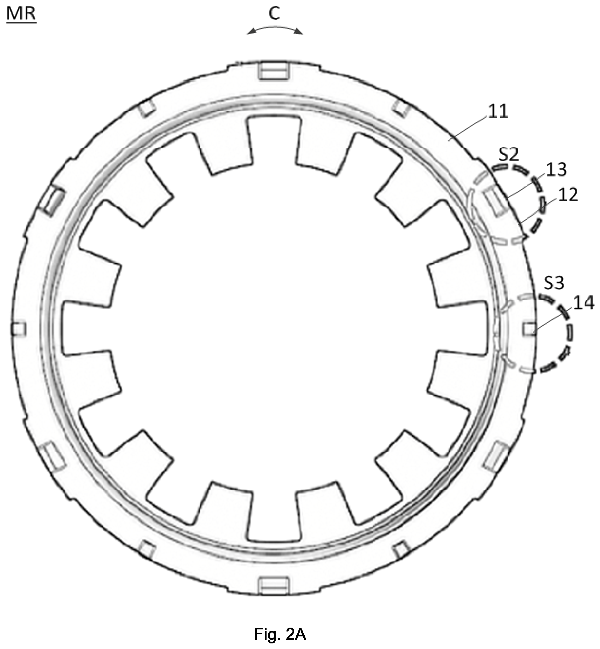

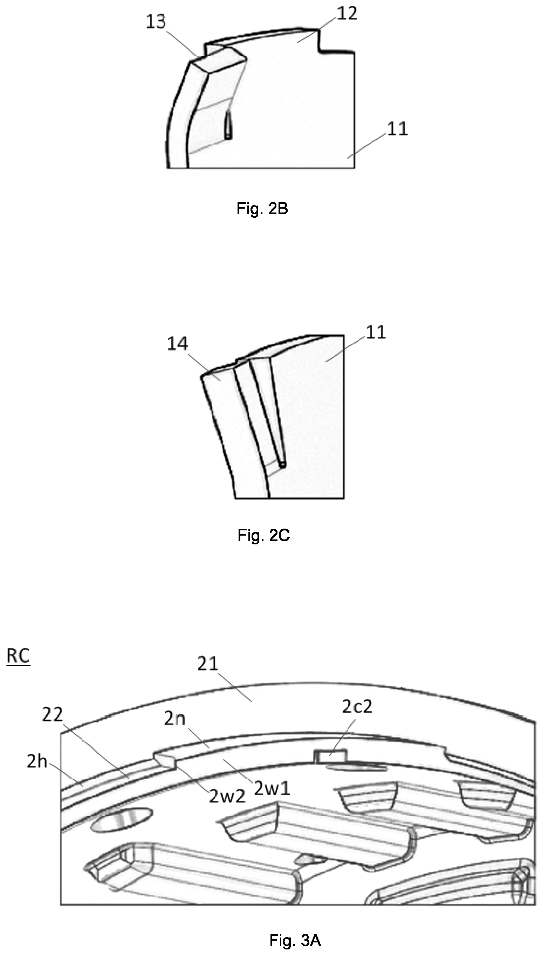

In diesem Ausführungsbeispiel umfasst der Montagering MR, wie in Fig. 1A und Fig. 1B sowie Fig. 2A bis Fig. 2C dargestellt, einstückig einen ringförmigen Grundkörper 11, Montagering-Haltezähne 12, erste Federlaschen 13 und zweite Federlaschen 14. Der ringförmige Grundkörper 11 erstreckt sich entlang der Umfangsrichtung über den gesamten Umfang kontinuierlich. Eine Mehrzahl von Montagering-Haltezähnen 12 (in diesem Ausführungsbeispiel 6) ist an einem Außenumfangsabschnitt des ringförmigen Grundkörpers 11 ausgebildet. Diese Montagering-Haltezähne 12 sind entlang der Umfangsrichtung gleichmäßig verteilt und beabstandet angeordnet, sodass der von den Umfangsmitten benachbarter Montagering-Haltezähne 12 gebildete Mittelpunktswinkel 60 Grad beträgt. Jeder Montagering-Haltezahn 12 ragt relativ zu anderen Bereichen des ringförmigen Grundkörpers 11 radial nach außen vor. Die ersten Federlaschen 13 sind an Bereichen des ringförmigen Grundkörpers 11 vorgesehen, an denen die Montagering-Haltezähne 12 ausgebildet sind. Jeder Montagering-Haltezahn 12 ist mit einer ersten Federlasche 13 versehen, und die erste Federlasche 13 befindet sich im Umfangsmittelbereich des entsprechenden Montagering-Haltezahns 12. Im Naturzustand sind die freien Enden der ersten Federlaschen 13, die vom ringförmigen Grundkörper 11 abgewandt sind, so ausgebildet, dass sie von der ersten axialen Seitenwand 2w1 weg, d. h. zur zweiten axialen Seitenwand 2w2 (zur anderen axialen Seite) hin, hochgebogen sind; im montierten Zustand des Montagerings MR liegen die ersten Federlaschen 13 an der zweiten axialen Seitenwand 2w2 der Ringnut 2c1 des Trägerbauteils RC an, wodurch sich die ersten Federlaschen 13 elastisch verformen und eine axiale Vorspannung erzeugen. Die zweiten Federlaschen 14 sind an Bereichen des ringförmigen Grundkörpers 11 vorgesehen, die die Montagering-Haltezähne 12 freilassen; zwischen jeweils zwei benachbarten Montagering-Haltezähnen 12 ist eine zweite Federlasche 14 ausgebildet, und die zweite Federlasche 14 befindet sich im Umfangsmittelbereich des Abschnitts zwischen den benachbarten Montagering-Haltezähnen 12. Der von den Umfangsmitten einer benachbarten ersten Federlasche 13 und einer zweiten Federlasche 14 gebildete Mittelpunktswinkel beträgt 30 Grad. Im Naturzustand sind die freien Enden der zweiten Federlaschen 14, die vom ringförmigen Grundkörper 11 abgewandt sind, so ausgebildet, dass sie zur ersten axialen Seitenwand 2w1 (zu einer axialen Seite) hin hochgebogen sind; im montierten Zustand des Montagerings MR ragen die zweiten Federlaschen 14 in die Haltenuten 2c2 hinein und befinden sich in ihrem Naturzustand, sodass der Montagering MR in der Umfangsrichtung C begrenzt wird und eine Relativdrehung zwischen dem Montagering MR und dem Trägerbauteil RC in der Umfangsrichtung C verhindert wird.

In diesem Ausführungsbeispiel umfasst das Trägerbauteil RC, wie in Fig. 1A und Fig. 1B sowie Fig. 3A und Fig. 3B dargestellt, einen Grundkörper 21, der je nach Bedarf verschiedene äußere Formen aufweisen kann und typischerweise zylindrisch ausgebildet sein kann. Der Grundkörper 21 bildet eine Montageöffnung 2h, durch die der Montagering MR entlang der Axialrichtung A zur Ringnut 2c1 bewegt wird; die Mittelachse der Montageöffnung 2h liegt auf derselben Geraden wie die Mittelachse der Ringnut 2c1. An einer Position nahe der Öffnung der Montageöffnung 2h ist die Ringnut 2c1 an einer Umfangswand der Montageöffnung 2h ausgebildet und erstreckt sich entlang der Umfangsrichtung C über den gesamten Umfang; die Ringnut 2c1 weist eine Öffnung auf, die radial nach innen weist und zur Montageöffnung 2h hin offen ist, und eine Bodenwand der Ringnut 2c1 bildet die radial äußere Wand der Ringnut 2c1. In einem entlang der Axialrichtung A und einer beliebigen Radialrichtung R geführten Schnitt kann die Ringnut 2c1 n-förmig sein, das heißt, in dem vorgenannten Schnitt verläuft die Bodenwand der Ringnut 2c1 axial A geradlinig oder bogenförmig und geht glatt über; die auf einer axialen Seite angeordnete erste axiale Seitenwand 2w1 der Ringnut 2c1 verläuft geradlinig entlang der Radialrichtung R, und die auf der anderen axialen Seite angeordnete zweite axiale Seitenwand 2w2 der Ringnut 2c1 verläuft ebenfalls geradlinig entlang der Radialrichtung R. Ferner bildet der Grundkörper 21 an einer Position nahe der Öffnung der Montageöffnung 2h Trägerhaltezähne 22; mehrere Trägerhaltezähne 22 sind entlang der Umfangsrichtung gleichmäßig verteilt und beabstandet angeordnet. Im montierten Zustand des Montagerings MR betrachtet man in Axialrichtung A, dass sich die Montagering-Haltezähne 12 und die Trägerhaltezähne 22 zumindest teilweise überlappen, um den Montagering MR axial zu begrenzen und ein unerwünschtes Herausfallen des Montagerings MR entlang der Axialrichtung A aus der Öffnung der Montageöffnung 2h zu verhindern. Ferner bildet der Grundkörper 21 Haltenuten 2c2 an der ersten axialen Seitenwand 2w1 der Ringnut 2c1. Im montierten Zustand des Montagerings MR ragen die zweiten Federlaschen 14 in die Haltenuten 2c2 hinein, um den Montagering MR in der Umfangsrichtung C zu begrenzen und so eine Relativdrehung zwischen dem Montagering MR und dem Trägerbauteil RC in der Umfangsrichtung C zu verhindern. Da der Montagering MR von der Öffnung der Montageöffnung 2h her in die Ringnut 2c1 eingesetzt werden muss, wird der Montagering MR entlang der Axialrichtung A zu der Position bewegt, an der sich die Ringnut 2c1 befindet. Um die axiale Bewegung des Montagerings MR zu erleichtern, bildet das Trägerbauteil RC zwischen benachbarten Trägerhaltezähnen 22 Kerben 2n; die Abmessungen der Kerben 2n können geringfügig größer sein als die der Montagering-Haltezähne 12, sodass die Montagering-Haltezähne 12 während des Vorgangs, in dem der Montagering MR entlang der Axialrichtung in die Ringnut 2c1 bewegt wird, durch die Kerben 2n hindurchtreten können, wodurch eine Interferenz zwischen den Montagering-Haltezähnen 12 und anderen Bereichen des Trägerbauteils RC vermieden wird. Die Kerben 2n können dadurch gebildet werden, dass ein Abschnitt der anderen axialen Seitenwand 2w2 der Ringnut 2c1 weggelassen wird; eine Außenumfangswand jeder Kerbe 2n ist mit der Außenumfangswand (Bodenwand) der Ringnut 2c1 fluchtend ausgerichtet, und infolgedessen weist die Ringnut 2c1 an dem Ort der Kerbe 2n tatsächlich nur die eine axiale Seitenwand 2w1 auf und lässt die andere axiale Seitenwand 2w2 vollständig weg. Auf diese Weise kann die Ringnut 2c1 mit dem Montagering MR ein Spielpassungs-Verhältnis aufweisen, sodass der Montagering MR über die Montageöffnung 2h entlang der Axialrichtung A zu der Position geführt werden kann, an der sich die Ringnut 2c1 befindet, und zudem sichergestellt ist, dass sich der Montagering MR während der Montage in der Ringnut 2c1 reibungslos verdrehen kann. Darüber hinaus können nach erfolgter Montage die Bodenwand der Ringnut 2c1 und die ringförmige Form des Montagerings MR selbst die radiale Begrenzung des Montagerings MR bewirken. Des Weiteren kann durch die in Axialrichtung überlappende Anordnung der Montagering-Haltezähne 12 und der Trägerhaltezähne 22 die axiale Begrenzung des Montagerings MR realisiert werden, um ein axiales Lösen des Montagerings MR zu verhindern, und durch das Hineinragen der zweiten Federlaschen 14 in die Haltenuten 2c2 kann die Umfangsbegrenzung des Montagerings MR realisiert werden. Außerdem können die ersten Federlaschen 13 eine axiale Vorspannung erzeugen, sodass die Struktur nach dem Zusammenbau des Montagerings MR mit dem Trägerbauteil RC fest und stabil ist. Somit wird der Montagering MR in der Radialrichtung R, der Axialrichtung A und der Umfangsrichtung C begrenzt, und die Ringbaugruppe weist an sich eine einfache Struktur auf, wobei der Bearbeitungsprozess vereinfacht ist. Weiterhin bildet die Ringbaugruppe der vorliegenden Anmeldung tatsächlich eine selbsthaltende Struktur, sodass im Vergleich zum Stand der Technik auf einen Sicherungsring verzichtet werden kann; dadurch wird die Anzahl der für die Begrenzung erforderlichen Bauteile reduziert, die Komplexität von Bearbeitungs- und Montageprozess der Ringbaugruppe verringert und die entsprechenden Kosten weiter gesenkt. Zudem können bei dem Fahrzeugantriebssystem gemäß einer Ausführungsform der vorliegenden Anmeldung in Transport- und Lagerzuständen Betätigungskolben in Kupplungseinheiten der Doppelkupplung CL gegen den Montagering MR anliegen und dadurch begrenzt werden, was den Transport und die Lagerung des Fahrzeugantriebssystems begünstigt.

Nachfolgend wird das Montageverfahren für die Ringbaugruppe gemäß der vorliegenden Anmeldung anhand der Zeichnungen erläutert.

Das Montageverfahren für die Ringbaugruppe gemäß der vorliegenden Anmeldung umfasst die nacheinander auszuführenden Schritte des Ausrichtens und des Verdrehens; durch diese Schritte kann der Montagering MR reibungslos in die Ringnut 2c1 eingesetzt werden.

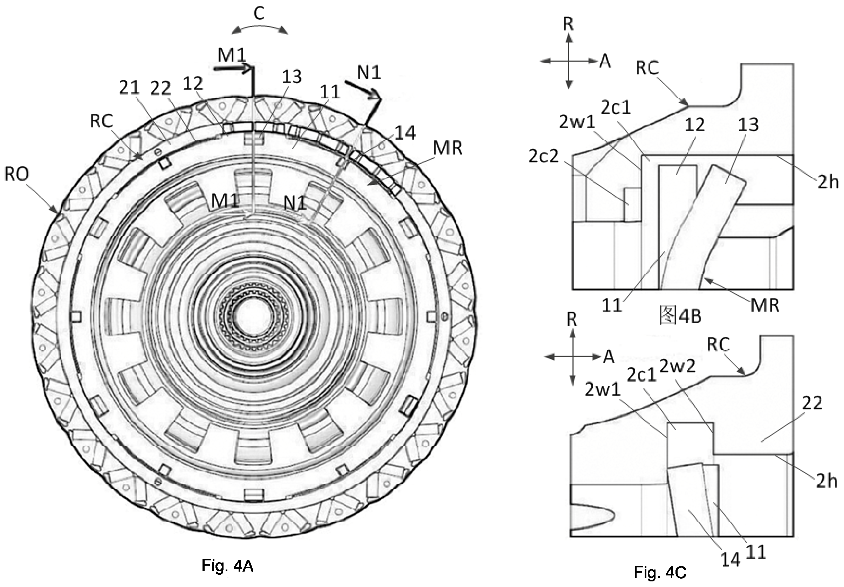

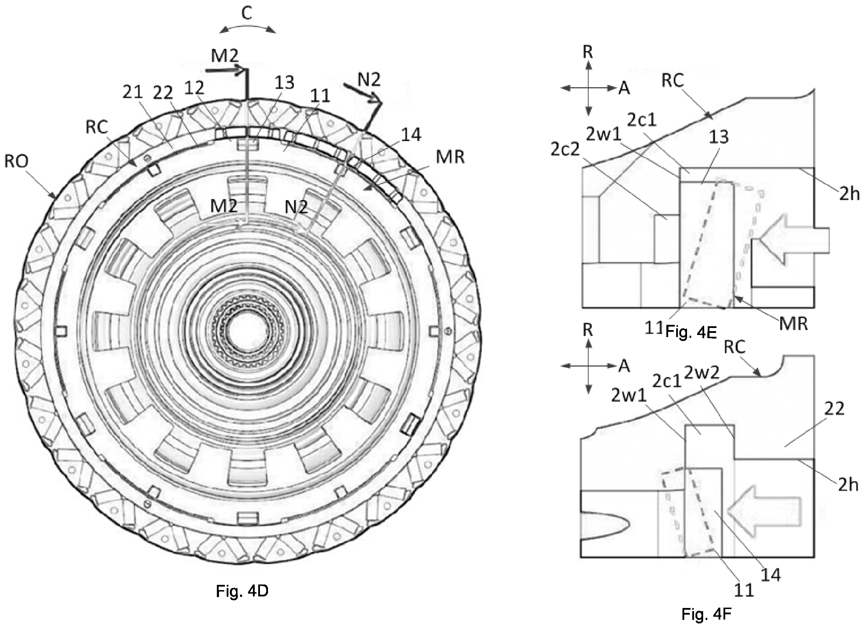

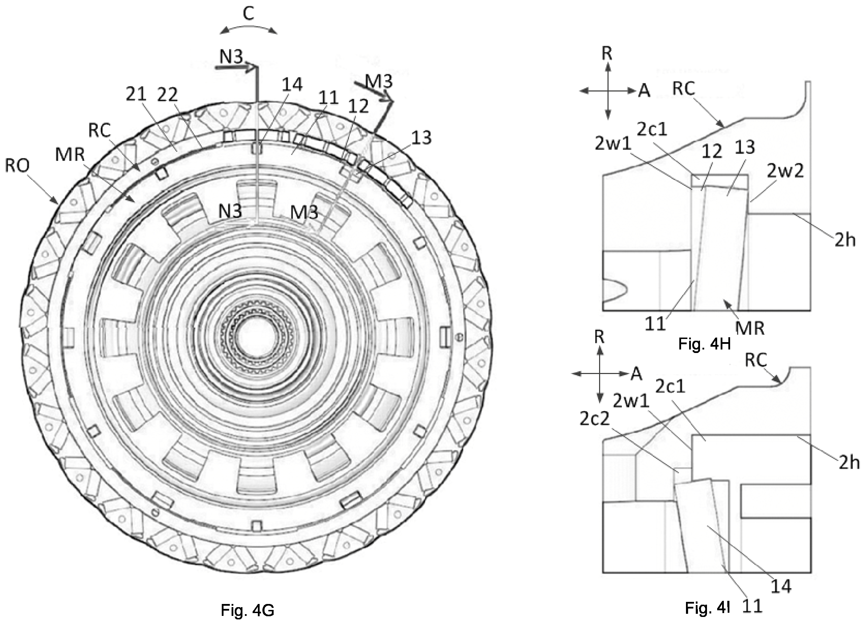

Wie in Fig. 4A bis Fig. 4C gezeigt, wird im Ausrichtungsschritt der Montagering MR an der Öffnung der Montageöffnung 2h des Trägerbauteils RC positioniert, und die Montagering-Haltezähne 12 des Montagerings MR werden in der Axialrichtung A mit den Kerben 2n des Trägerbauteils RC fluchtend ausgerichtet. In diesem Zustand wird der Montagering MR entlang der Axialrichtung A in die Montageöffnung 2h eingeführt und zu der Position bewegt, an der sich die Ringnut 2c1 des Trägerbauteils RC befindet.

Wie in Fig. 4D bis Fig. 4G gezeigt, wird im Rotationsschritt der Montagering MR in Umfangsrichtung relativ zum Trägerbauteil RC verdreht, sodass die zweiten Federlaschen 14 in die Haltenuten 2c2 hineinragen und, in Axialrichtung A betrachtet, sich die Montagering-Haltezähne 12 und die Trägerhaltezähne 22 des Trägerbauteils RC zumindest teilweise überlappen; die ersten Federlaschen 13 liegen an der zweiten axialen Seitenwand 2w2 an und verformen sich elastisch, wodurch eine axiale Vorspannung entsteht. Außerdem kann es in diesem Schritt, da im Naturzustand an den Montagering-Haltezähnen 12 und den Trägerhaltezähnen 22 während der Relativdrehung des Montagerings MR gegenüber dem Trägerbauteil RC eine Interferenz auftreten kann, wie in Fig. 4D bis Fig. 4F gezeigt, angezeigt sein, vor dem Verdrehen des Montagerings MR einen axialen Druck auf den Montagering MR auszuüben, sodass die freien Enden der ersten Federlaschen 13 und der zweiten Federlaschen 14 elastisch bis in einen annähernd coplanaren Zustand mit dem ringförmigen Grundkörper 11 verformt werden. Dadurch kann die oben beschriebene Interferenz vermieden werden. Die vorliegende Anmeldung ist nicht auf die in den oben genannten Ausführungsbeispielen beschriebenen Lösungen beschränkt; Fachleute können auf der Grundlage der Lehre der vorliegenden Anmeldung verschiedene Abwandlungen der oben beschriebenen Ausführungsbeispiele vornehmen, ohne den Schutzumfang der vorliegenden Anmeldung zu verlassen. Nachfolgend werden die technischen Lösungen der vorliegenden Anmeldung ergänzend erläutert.
i. In den oben genannten Ausführungsbeispielen wurde beschrieben, dass die Ringbaugruppe der vorliegenden Anmeldung in einem Fahrzeugantriebssystem eingesetzt wird, die vorliegende Anmeldung ist jedoch nicht hierauf beschränkt. In anderen Einsatzszenarien, in denen eine Montage mit einer Passung zwischen Montagering und Ringnut erforderlich ist, kann die Ringbaugruppe gemäß der vorliegenden Anmeldung ebenfalls in geeigneter Weise verwendet werden. Zudem ist der Montagering nicht auf das oben beschriebene Erfassungsziel des Wirbelstromsensors beschränkt, sondern kann auch ein anderer Ringkörper sein.

Außerdem wurde in den oben genannten Ausführungsbeispielen beschrieben, dass die Ringnut 2c1 des Trägerbauteils RC in der Ringbaugruppe der vorliegenden Anmeldung eine radial nach innen offene radiale Öffnung aufweist; die vorliegende Anmeldung ist jedoch nicht hierauf beschränkt. In anderen Einsatzszenarien kann die Ringnut 2c1 der Ringbaugruppe gemäß der vorliegenden Anmeldung eine radial nach außen offene radiale Öffnung aufweisen; in diesem Fall kann der Montagering von radial außen über das Trägerbauteil aufgesetzt werden, und Merkmale wie erste Federlaschen, zweite Federlaschen usw. können an einem Innenumfangsabschnitt des Montagerings ausgebildet werden.

ii.In den oben genannten Ausführungsbeispielen wurde beschrieben, dass der Montagering MR der Ringbaugruppe der vorliegenden Anmeldung zwei Federlaschen 13, 14 aufweist; die vorliegende Anmeldung ist jedoch nicht hierauf beschränkt. In einer optionalen Ausführungsform kann die Ringbaugruppe nur mit den ersten Federlaschen 13 ausgebildet sein, während die zweiten Federlaschen 14 weggelassen sind; durch die ersten Federlaschen 13 und entsprechende an den Trägerhaltezähnen vorgesehene Haltenuten kann die Umfangsbegrenzung des Montagerings MR sowie die Bereitstellung einer axialen Vorspannung realisiert werden.

Ferner wurde in den oben genannten Ausführungsbeispielen beschrieben, dass im montierten Zustand des Montagerings MR der Ringbaugruppe der vorliegenden Anmeldung die zweiten Federlaschen 14 nicht an der ersten axialen Seitenwand 2w1 anliegen und sich in ihrem Naturzustand befinden; die vorliegende Anmeldung ist jedoch nicht hierauf beschränkt. In einer optionalen Ausführungsform können im montierten Zustand des Montagerings MR die zweiten Federlaschen 14 nicht nur in die Haltenuten 2c2 hineinragen, sondern auch an der ersten axialen Seitenwand 2w1 der Ringnut 2c1 des Trägerbauteils RC anliegen, sodass die zweiten Federlaschen 14 sich elastisch verformen und eine axiale Vorspannung erzeugen, während gleichzeitig eine Relativdrehung zwischen dem Montagering MR und dem Trägerbauteil RC in der Umfangsrichtung C verhindert wird. Auf diese Weise können sowohl die ersten Federlaschen 13 als auch die zweiten Federlaschen 14 eine axiale Vorspannung erzeugen, wodurch die Struktur nach dem Zusammenbau des Montagerings MR mit dem Trägerbauteil RC noch fester und stabiler wird.

iii. In den oben genannten Ausführungsbeispielen wurde beschrieben, dass die ersten Federlaschen 13 an Bereichen des ringförmigen Grundkörpers 11 vorgesehen sind, an denen die Montagering-Haltezähne 12 ausgebildet sind, und die zweiten Federlaschen 14 an Bereichen des ringförmigen Grundkörpers 11, die die Montagering-Haltezähne 12 freilassen; die vorliegende Anmeldung ist jedoch nicht hierauf beschränkt. Eine der beiden Federlaschenarten 13 bzw. 14 kann an Bereichen des ringförmigen Grundkörpers 11 vorgesehen sein, an denen die Montagering-Haltezähne 12 ausgebildet sind, und die jeweils andere Federlaschenart kann an Bereichen des ringförmigen Grundkörpers 11 vorgesehen sein, die die Montagering-Haltezähne 12 freilassen.

### Bezugszeichenliste

SH1 Eingangswelle
SH2 erste Ausgangswelle
SH3 zweite Ausgangswelle
CL Doppelkupplung
RO Motorrotor
MR Montagering
11 ringförmiger Grundkörper
12 Montagering-Haltezähne
13 erste Federlasche
14 zweite Federlasche RC Trägerbauteil
21 Grundkörper
22 Trägerhaltezähne
2c1 Ringnut
2w1 erste axiale Seitenwand
2w2 zweite axiale Seitenwand
2c2 Haltenut
2h Montageöffnung
2n Kerbe
A Axialrichtung
R Radialrichtung
C Umfangsrichtung

## Patentansprüche

1. Ringbaugruppe, umfassend einen Montagering (MR) und ein zusammengefügtes Trägerbauteil (RC), wobei das Trägerbauteil (RC) mit einer eine radiale Öffnung aufweisenden Ringnut (2c1) ausgebildet ist und der Montagering (MR) in der Ringnut (2c1) angeordnet ist, wobei der Montagering (MR) mit Montagering-Haltezähnen (12) ausgebildet ist und das Trägerbauteil (RC) mit Trägerhaltezähnen (22) ausgebildet ist, und sich in Axialrichtung (A) des Montagerings (MR) die Montagering-Haltezähne (12) und die Trägerhaltezähne (22) zumindest teilweise überlappen, um den Montagering (MR) axial zu sichern; wobei das Trägerbauteil (RC) ferner eine Kerbe (2n) ausbildet und während der Montage, in der der Montagering (MR) in Axialrichtung (A) zur Ringnut (2c1) bewegt wird, die Montagering-Haltezähne (12) durch die Kerbe (2n) hindurchtreten; und wobei der Montagering (MR) mit mindestens einer Federlasche ausgebildet ist und das Trägerbauteil (RC) an einer ersten axialen Seitenwand (2w1) oder einer zweiten axialen Seitenwand (2w2) der Ringnut (2c1) mindestens eine zur einen axialen Seite des Trägerbauteils (RC) oder zur anderen axialen Seite des Trägerbauteils (RC) eingetiefte Haltenut (2c2) ausbildet, wobei die Federlasche in die Haltenut (2c2) hineinragt, um den Montagering (MR) in Umfangsrichtung (C) umlaufend zu sichern.

2. Ringbaugruppe nach Anspruch 1, wobei der Montagering (MR) eine Mehrzahl erster Federlaschen (13) umfasst, die in den Montagering-Haltezähnen (12) ausgebildet sind, wobei die ersten Federlaschen (13) an der zweiten axialen Seitenwand (2w2) anliegen, sodass sich die ersten Federlaschen (13) elastisch verformen und eine axiale Vorspannung erzeugen.

3. Ringbaugruppe nach Anspruch 2, wobei der Montagering (MR) ferner als die mindestens eine Federlasche eine zweite Federlasche (14) ausbildet, die gegen eine auf einer axialen Seite angeordnete Seitenwand der Haltenut (2c2) anliegt, sodass sich die zweite Federlasche (14) elastisch verformt und eine axiale Vorspannung erzeugt.

4. Ringbaugruppe nach Anspruch 3, wobei der Montagering (MR) ferner einen ringförmigen Grundkörper (11) umfasst, an dem die Montagering-Haltezähne (12) ausgebildet sind; wobei die zweite Federlasche (14) an einem Abschnitt des ringförmigen Grundkörpers (11) vorgesehen ist, der die Montagering-Haltezähne (12) freilässt; und wobei die mindestens eine Haltenut (2c2) an der Position der Kerbe (2n) in der ersten axialen Seitenwand (2w1) der Ringnut (2c1) ausgebildet ist.

5. Ringbaugruppe nach Anspruch 4, wobei zumindest im Naturzustand ein vom ringförmigen Grundkörper (11) abgewandtes freies Ende der zweiten Federlasche (14) relativ zum ringförmigen Grundkörper (11) zu einer axialen Seite hin angehoben ist und ein vom ringförmigen Grundkörper (11) abgewandtes freies Ende der ersten Federlasche (13) relativ zum ringförmigen Grundkörper (11) zur anderen axialen Seite hin angehoben ist.

6. Ringbaugruppe nach einem der Ansprüche 1 bis 5, wobei mehrere Montagering-Haltezähne (12) gleichmäßig verteilt und entlang der Umfangsrichtung (C) beabstandet angeordnet sind, mehrere Trägerhaltezähne (22) gleichmäßig verteilt und entlang der Umfangsrichtung (C) beabstandet angeordnet sind und das Trägerbauteil (RC) die Kerbe (2n) zwischen benachbarten Trägerhaltezähnen (22) ausbildet.

7. Ringbaugruppe nach einem der Ansprüche 1 bis 5, wobei das Trägerbauteil (RC) mit einer Montageöffnung (2h) ausgebildet ist, durch die der Montagering (MR) in Axialrichtung (A) zur Ringnut (2c1) bewegt wird, wobei die Ringnut (2c1) eine radial nach innen weisende Öffnung aufweist, die zur Montageöffnung (2h) hin offen ist; wobei die Ringnut (2c1) in einem entlang der Axialrichtung (A) des Montagerings (MR) und einer beliebigen Radialrichtung (R) geführten Schnitt einen n-förmigen Querschnitt aufweist; und wobei in dem Schnitt eine Bodenwand der Ringnut (2c1) axial geradlinig oder bogenförmig verläuft.

8. Verfahren zum Montieren der Ringbaugruppe nach einem der Ansprüche 1 bis 7, umfassend: einen Ausrichtungsschritt, in dem die Montagering-Haltezähne (12) des Montagerings (MR) in Axialrichtung (A) des Montagerings (MR) mit der Kerbe (2n) des Trägerbauteils (RC) fluchtet werden und der Montagering (MR) in Axialrichtung (A) zu einer Position bewegt wird, an der sich die Ringnut (2c1) des Trägerbauteils (RC) befindet; und einen Rotationsschritt, in dem der Montagering (MR) relativ zum Trägerbauteil (RC) in Umfangsrichtung (C) des Montagerings (MR) verdreht wird, sodass die Federlasche in die Haltenut (2c2) hineinragt und sich die Montagering-Haltezähne (12) und die Trägerhaltezähne (22) des Trägerbauteils (RC) in Axialrichtung (A) zumindest teilweise überlappen.

9. Fahrzeugantriebssystem, umfassend die Ringbaugruppe nach einem der Ansprüche 1 bis 7.

10. Fahrzeugantriebssystem nach Anspruch 9, wobei der Montagering (MR) der Ringbaugruppe als Zielkörper eines Wirbelstromsensors dient und das Trägerbauteil (RC) ein Rotorträger ist.
